# EUROPÄISCHE PATENTSCHRIFT

(11) **EP 0 784 008 B1**
(45) Veröffentlichungstag und Bekanntmachung des Hinweises auf die Patenterteilung: **07.05.2003**
(21) Anmeldenummer: 97100363.7
(22) Anmeldetag: 10.01.1997
(51) Int. Cl.: B62M 23/02

(54) **Mit Muskelkraft betreibbares Fahrzeug, insbesondere Fahrrad**
Vehicle propelled by muscle-power
Véhicule propulsé par force musculaire

(30) Priorität: 10.01.1996 DE 19600698
(43) Veröffentlichungstag der Anmeldung: 16.07.1997
(73) Patentinhaber: Magnet-Motor Gesellschaft für magnetmotorische Technik mbH, D-82319 Starnberg (DE)
(72) Erfinder: Ehrhart, Peter, 81375 München (DE); Weck, Werner, 82319 Starnberg (DE)
(74) Vertreter: Klunker . Schmitt-Nilson . Hirsch

(56) Entgegenhaltungen:
- WO-A-84/04076
- DE-A- 3 525 059
- DE-A- 3 719 486
- DE-A- 4 333 638
- US-A- 3 884 317
- US-A- 4 516 647
- US-A- 4 871 042

## Beschreibung

Gegenstand der Erfindung ist ein mit Muskelkraft betreibbares Fahrzeug, insbesondere Fahrrad, aufweisend
(a) einen Generator, der zur Stromerzeugung durch einen Fahrzeugbenutzer antreibbar ist;
(b) und mindestens einen Elektromotor zum Antreiben des Fahrzeugs, der mit dem Generator zur Übertragung elektrischer Leistung verbunden ist.

Bisherige, mit Muskelkraft betreibbare Fahrzeuge, insbesondere Fahrräder, sind üblicherweise mit einer Einrichtung zur mechanischen Leistungsübertragung zwischen dem Ort der Leistungsaufbringung mit Muskelkraft, z.B. Tretkurbel mit Pedalen, und dem Ort der Leistungsumsetzung in Bewegungsantrieb, z.B. angetriebenes Fahrzeugrad, versehen. Insbesondere bei Sport- und Rennsportfahrrädern ist diese Einrichtung zur mechanischen Leistungsübertragung mit einer Schalteinrichtung ausgestattet, um unter mehreren Übersetzungsverhältnissen bzw. Untersetzungsverhältnissen wählen zu können. Es wäre nämlich für den Fahrzeugbenutzer in der Praxis kaum möglich oder zumindest sehr unbequem, einen großen Bereich der Fahrzeuggeschwindigkeit und/oder einen großen Bereich der Größe von Fahrwiderständen (Fahrt in der Ebene / Bergfahrt, Fahrt ohne Windeinflüsse / Fahrt mit Gegenwind, Fahrt mit nur mit dem Fahrzeugbenutzer belasteten Fahrzeug / Fahrt mit weiteren mitgeführten Lasten) mit nur einem festgelegten Übersetzungsverhältnis bzw. Untersetzungsverhältnis zu bewältigen. Schalteinrichtungen, die in der Einrichtung zur mechanischen Leistungsübertragung arbeiten, erfüllen ihren Zweck nur sehr unzureichend, wenn sie nur über wenige Schaltstufen verfügen. Bei einer großen Zahl von Schaltmöglichkeiten erfordern sie aber viel Geschick und Erfahrung beim Fahrzeugbenutzer zum Auffinden der passenden Schaltstufe unter ständig wechselnden Fahrbedingungen. Außerdem sind sie mechanisch z.T. kompliziert und störanfällig und bedürfen der Wartung und der Nachjustierung in nicht allzu großen Zeitabständen.

US-A-3,884,317 beschreibt ein Fahrrad gemäß dem Oberbegriff des Anspruchs 1, bei dem die Leistung vom Ort der Leistungsaufbringung zum Ort des Leistungsverbrauchs nicht auf mechanischem Wege, sondern auf elektrischem Wege übertragen wird. Durch eine derartige "elektrische" Kraftübertragung ergeben sich erheblich günstigere Verhältnisse für die "Übersetzung" bzw. "Untersetzung" zwischen dem Ort der Leistungsaufbringung und dem Ort der Leistungsumsetzung in Bewegungsantrieb und für umstellende Veränderungen dieser "Übersetzung" bzw. "Untersetzung". Insbesondere ergibt sich die Möglichkeit einer kontinuierlichen stufenlosen Kraftübertragung oder anders ausgedrückt der elektrischen Realisierung einer automatischen Fahrradschaltung mit "unendlich vielen" Gängen.

Generatoren und Elektromotoren sind Komponenten, die unschwer als Komponenten mit sehr hohem Wirkungsgrad gebaut werden können; sie sind als Massenprodukte preiswert herstellbar und erfordern praktisch keine Wartung. Sowohl der Generator als auch der Elektromotor kann in Linearbauweise oder in Rotationsbauweise ausgeführt sein. Der Einfachheit halber sind die nachfolgende Erfindungsbeschreibung und ein einschlägiger Teil der Ansprüche auf die Rotationsbauweise ausgerichtet. Es wird jedoch ausdrücklich darauf hingewiesen, daß zum Bereich der Erfindung auch die Linearbauweise gehört. Deshalb sind Begriffe wie Drehmoment oder Drehzahl zu verstehen als "Drehmoment bzw. Linearkraft" und "Drehzahl bzw. Lineargeschwindigkeit". Nichtsdestoweniger ist allerdings die Rotationsbauweise von Generator und/oder Elektromotor bevorzugt, weil sie normalerweise unkomplizierter für die Praxis verwirklichbar ist.

Generatoren der üblichen Bauarten liefern normalerweise Wechselstrom, sofern nicht durch geeignete Bauteile, im einfachen Fall z.B. ein mechanischer Kommutator, für Umwandlung in Gleichstrom gesorgt wird. So kann bei US-A-3,884,317 dem Generator ein passiver, ungesteuerter Gleichrichter zugeordnet sein. Dieser Gleichrichter speist einen Gleichspannungszwischenkreis, aus dem der Antriebs-Elektromotor gespeist werden kann.

Der Nachteil dieses Stands der Technik liegt darin, daß die Steuerungsmöglichkeiten relativ eingeschränkt sind und das zuvor geschilderte Handlingproblem bei einer großen Zahl von Schaltmöglichkeiten für den Benutzer weiterhin besteht. Deshalb unterscheidet sich die vorliegende Erfindung von dem bekannten Stand der Technik dadurch, daß der Generator zur gesteuerten Auskupplung elektrischer Leistung mit elektronischer Kommutierung aufgebaut ist und dem Generator eine elektronische Steuerung zugeordnet ist, mit der die Größe der ausgekoppelten elektrischen Leistung stufenweise oder stufenlos veränderbar ist und daß der Elektromotor mit elektronischer Kommuntierung aufgebaut ist, wobei dem Generator und dem Elektromotor eine elektronische Steuerung zugeordnet ist, mit der das Verhältnis des am Generator aufgebrachten Antriebsdrehmoments zu dem von dem Elektromotor abgegebenen Drehmoment stufenweise oder stufenlos veränderbar ist.

Die elektronische Kommutierung des Elektromotors ergibt besonders gute Regelbarkeit und optimierte Wartungsfreiheit. Elektromotoren mit elektronischer Kommutierung sind bekannt, so daß hier weitere Details nicht beschrieben werden müssen.

Als typisches Beispiel der elektronischen Kommuntierung wird der Einsatz eines leistungselektronischen Vierquadrantenwechselrichters auf Basis von IGBT-Halbleiterbauelementen genannt. Dabei kann der Stromverlauf in den Spulen des Generators aktiv beeinflußt werden im Sinne einer Annäherung an den Spannungsverlauf.

Ein besonders hervorzuhebender Vorteil der gesteuerten Auskopplung elektrischer Leistung durch die elektronische Kommutierung besteht darin, daß man diese Auskopplung auf technisch einfache Weise variieren kann. Dafür ist dem Generator eine elektronische Steuerung zugeordnet, mit der die Größe der ausgekoppelten elektrischen Leistung stufenweise oder stufenlos veränderbar ist. Wenn man z.B. durch elektronisch veränderte Einstellung mehr elektrische Leistung auskoppelt, erhöht sich - unveränderte Generatordrehzahl vorausgesetzt - normalerweise das Drehmoment, mit dem der Generator angetrieben werden muß.

Mit dem Generator wird elektrische Leistung erzeugt, wobei die Größe der erzeugten elektrischen Leistung - wenn man von den normalerweise geringfügigen elektrischen Verlusten absieht - das Produkt aus am Generator aufgebrachten Drehmoment und Generatordrehzahl ist. In erster Linie kann der Fahrzeugbenutzer die Größe der elektrischen Leistung durch Variieren der Generatordrehzahl verändern. Im Fall des passiven, ungesteuerten Gleichrichters verändert sich mit der Generatordrehzahl das Generatordrehmoment entsprechend der Generatorkennlinie und den elektrischen Randbedingungen. Im Fall des gesteuerten Generators mit veränderbarer, gesteuerter Auskopplung der elektrischen Leistung kann das zum Antreiben des Generators erforderliche Drehmoment (aber auch die Generatordrehzahl) entweder durch die programmierte Steuerung oder durch den Fahrzeugbenutzer verändert werden, um auf diese Weise die erzeugte elektrische Leistung zu beeinflussen. Eine erhöhte elektrische Leistung aus dem Generator soll normalerweise mittels des Elektromotors in erhöhte Antriebsleistung auf das Fahrzeug umgesetzt werden. Wenn man des einfacheren Überblicks halber den Fall des sich mit gleichbleibender Geschwindigkeit v bewegenden Fahrzeugs betrachtet, dann wird die erhöhte elektrische Leistung zunächst primär in erhöhtes Drehmoment des Elektromotors umgesetzt (weil die Drehzahl des Elektromotors und damit gekoppelt die Fahrgeschwindigkeit des Fahrzeugs praktisch nicht sprunghaft erhöht werden können). Das erhöhte Drehmoment des Elektromotors führt dazu, daß das Fahrzeug beschleunigt (vorausgesetzt, daß die Fahrwiderstände nicht just in dieser Zeitphase z.B. durch einen zu bewältigenden Berganstieg zunehmen). Da die Fahrwiderstände mit zunehmender Fahrgeschwindigkeit normalerweise ansteigen, insbesondere durch den zunehmenden Luftwiderstand, geht die Fahrzeugbewegung zu einem neuen Gleichgewichtszustand, bei dem der Elektromotor die erhöhte elektrische Leistung teils durch erhöhtes Elektromotor-Drehmoment M2 und teils durch erhöhte Elektromotor-Drehzahl n2 umsetzt. Zu einem ganz ähnlichen Übergang zu einem neuen Gleichgewichtszustand kommt es, wenn nicht die Größe der erzeugten elektrischen Leistung zunimmt, sondern die Fahrwiderstände abnehmen, z.B. bei Bergabfahrt oder einsetzendem Rückenwind; das Fahrzeug erhöht seine Fahrgeschwindigkeit bis zum Erreichen des neuen Gleichgewichts. Übergang zu einem neuen Gleichgewicht der Fahrzeugbewegung erfolgt in ganz analoger Weise, aber gleichsam in umgekehrter Richtung, wenn die Größe der erzeugten elektrischen Leistung abnimmt oder die Fahrwiderstände zunehmen, z.B. bei Bergauffahrt; die neue Gleichgewichts-Fahrgeschwindigkeit des Fahrzeugs ist niedriger als zuvor.

Es wird darauf hingewiesen, daß die vorstehend beschriebenen Übergänge zu einem neuen Gleichgewicht der Fahrzeugbewegung voraussetzen, daß die erzeugte elektrische Leistung in dem Elektromotor umgesetzt werden kann. Sofern in extremen Situationen, z.B. Maximaldrehmoment des Elektromotors bei kleiner Drehzahl des Elektromotors erreicht, die elektrische Leistung nicht umgesetzt werden kann, wird durch die genannte elektronische Steuerung oder auch allein aufgrund der elektrischen Gegebenheiten die vorgesehene Generatorgetriebsweise verlassen (z.B. Tretwiderstand am Generator wird verringert), bis das Leistungsgleichgewicht wieder hergestellt ist.

In einem bevorzugten, einfachen Fall hat der Fahrzeugbenutzer eine Bedieneinrichtung zum stufenweisen oder stufenlosen Verändern der Größe der ausgekoppelten elektrischen Leistung zur Verfügung, die mit der elektronischen Steuerung des Generators verbunden ist. Dabei macht sich vom "Tretgefühl" her eine Erhöhung der ausgekoppelten elektrischen Leistung als "es läßt sich jetzt schwerer treten" bemerkbar, d.h. durch ein erhöhtes zu erbringendes Drehmoment umgekehrt bei Erniedrigung der ausgekoppelten elektrischen Leistung; dies ähnelt der Veränderung des Tretgefühls beim Hinaufschalten bzw. dem Herabschalten bei einem herkömmlichen Fahrrad.

In einer anderen beanspruchten Ausgestaltung der Erfindung wird das von herkömmlichen Schalteinrichtungen bei Fahrrädern her bekannte feste Übersetzungsverhältnis zwischen Tretkurbel und Rad elektronisch nachgebildet. Im einfachsten Fall wird hierzu das vom Elektromotor abgegebene Drehmoment über den Quotienten aus Leistung (ev. unter Berücksichtigung des Wirkungsgrades) und Drehzahl (resp. Winkelgeschwindigkeit) ermittelt oder auch über die von der elektronischen Steuerung an die Spulen des Elektromotors abgegebene, mit dem Drehmoment des Elektromotors in etwa lineare Stromhöhe ermittelt (wobei der Strom aus der Stromvorgabe festgestellt oder direkt gemessen wird) und hiermit das vom Generator aufzunehmende Drehmoment über die Höhe des Stroms in den Generatorspulen durch entsprechende Einstellung der elektronischen Steuerung festgelegt. Dabei wird zwischen den beiden Drehmomenten, dem des Motors und dem darauf bezogenen des Generators, ein gewünschtes Verhältnis, entweder in Stufen schaltbar oder stufenlos eingestellt. In anderen Worten, das Drehmoment des Generators, das der Fahrzeugbenutzer zu erbringen hat, richtet sich nach der Höhe des vom Elektromotor erbrachten und damit am Rad anliegenden Drehmoments.

Der Fahrzeugbenutzer spürt damit, wie es bei konventionellen Fahrrädern der Fall ist, direkt alle Fahrwiderstandsänderungen.

Die Übersetzungsverhältnisse sind durch den Fahrzeugbenutzer im Fall der Stufenschaltbarkeit z.B. durch einen an den herkömmlichen Gangwahlhebel angelehnten Schalter oder im Fall der stufenlosen Einstellbarkeit z.B. durch ein elektrisches Potentiometer wählbar.

Wegen des Leistungsgleichgewichts zwischen Generator und Elektromotor ist mit den genannten Drehmomentverhältnissen jeweils auch ein entsprechendes Drehzahlverhältnis festgelegt.

Die angegebene Ausgestaltung beinhaltet auch die Möglichkeit der Freilauffunktion herkömmlicher Fahrräder, d.h. Antriebskraft und -leistung wird nur dann übertragen, wenn der Fahrzeugbenutzer mit der durch das Antriebsrad vorgegebenen Drehzahl antreibt.

Die Verstellung der ausgekoppelten elektrischen Leistung nach Willen des Fahrzeugbenutzers ist nicht die einzige Möglichkeit. Vielmehr ist in weiterer Ausgestaltung der Erfindung eine Fahrzeugausbildung bevorzugt, bei der die elektronische Steuerung selbsttätig die Größe der ausgekoppelten elektrischen Leistung oder das genannte Drehmomentverhältnis verändert, wenn das am Generator aufgebrachte Drehmoment oder die Drehzahl des Generators einen vorbestimmten Bereich verläßt. Dieser vorbestimmte Bereich wird vorzugsweise so festgelegt, daß der Fahrzeugbenutzer den Generator in einem Bereich von bequemer Antriebsdrehzahl antreibt. Wenn der Fahrzeugbenutzer, im Wunsch höherer Leistungserzeugung, nach oben aus diesem bequemen Antriebsdrehzahlbereich herauskommt, ist es sinnvoller, auf ein höheres, am Generator aufzubringendes Drehmoment überzugehen (also gleichsam lieber schwerer zu treten), und umgekehrt beim Herauskommen aus dem bequemen Drehzahlbereich nach unten. Ähnliches gilt, wenn man stattdessen einen Bereich von bequem bewältigbarem Drehmoment am Generator betrachtet.

In weiterer Ausgestaltung kann man vorsehen, daß der genannte vorbestimmte Bereich veränderbar ist, z.B. nach Wunsch des Fahrzeugbenutzers ausgeweitet, eingeengt, nach oben verschoben oder nach unten verschoben werden kann. So werden unterschiedliche Fahrzeugbenutzer unterschiedliche vorbestimmte Bereiche als bequem empfinden. Auch der persönliche körperliche Trainingszustand, die Umgebungstemperatur, die herrschende Luftfeuchtigkeit oder auch einfach die Tageslaune mögen Parameter sein, die den betreffenden Fahrzeugbenutzer das Umstellen des vorbestimmten Bereichs als günstig erscheinen lassen.

Es wird darauf hingewiesen, daß die beschriebene Veränderung der ausgekoppelten elektrischen Leistung, sei es nach Willen des Fahrzeugbenutzers oder selbsttätig, eine andersartige Änderung des "Tretgefühls" mit sich bringt als beim Umschalten einer Gangschaltung bei einem herkömmlichen Fahrrad. Während beim herkömmlichen Fahrrad ein Umschalten zwangsläufig mit einer sprunghaften Änderung der Drehzahl der Tretkurbel einhergeht, kann der Fahrzeugbenutzer beim erfindungsgemäßen Fahrzeug - wenn er will - auch bei dem erhöhten oder erniedrigten, aufzubringenden Drehmoment sofort mit der alten Drehzahl weitermachen.

Generatoren haben eine Drehmoment-Drehzahl-Charakteristik, die normalerweise nicht ein waagerechter Verlauf des Drehmoments über der Drehzahl und nicht eine proportionale Charakteristik ist. Im einzelnen hängt die Charakteristik vom Bauarttyp des Generators und von dessen Detailausführung ab. Ohne besondere Vorkehrungen hat man es meist mit einer nichtlinearen Zunahme des erforderlichen Antriebsdrehmoments über der Drehzahl zu tun. In Weiterbildung der Erfindung ist es bevorzugt, wenn der Generator eine Drehmoment-Drehzahl-Charakteristik mit einem Drehmomentplateau in einem häufig benutzten Drehzahlbereich besitzt, wobei vorzugsweise die Charakteristik einprogrammierbar ist. Der Begriff Drehmomentplateau bedeutet nicht zwingend einen dort bereichsweise waagerechten Verlauf des Drehmoments über der Drehzahl (wiewohl ein solcher möglich und sogar bevorzugt ist), sondern einen deutlich flacheren Verlauf des Drehmoments über der Drehzahl als vor und nach dem Plateau, vorzugsweise einen dem bereichsweise geradlinig-waagerechten Verlauf angenäherten Verlauf. Bei der angesprochenen Erfindungsweiterbildung wird die Drehmoment-Drehzahl-Charakteristik vorzugsweise durch eine dem Generator zugeordnete Mikroprozessorsteuerung verwirklicht. Man kann eine Schnittstelle vorsehen, über die von außen her die Mikroprozessorsteuerung programmiert werden kann, um eine Charakteristik oder auch mehrere Charakteristiken zur Auswahl einzuprogrammieren. Diese spezielle Steuerung kann auch Teil der oben beschriebenen elektronischen Steuerung des Generators sein und in diese integriert sein.

Wie durch die Formulierung "mindestens einen Elektromotor" im ersten Absatz der Beschreibung bereits zum Ausdruck gebracht, kann man das Fahrzeug insbesondere mit nur einem Antriebs-Elektromotor ausführen oder mehrere Antriebs-Elektromotoren vorsehen, wobei vorzugsweise jeder Elektromotor einem anderen Rad des Fahrzeugs zugeordnet ist. Ein besonders bevorzugter Fall ist ein Elektromotor pro Fahrzeugrad, was sogar bei einem Fahrrad Sinn macht.

Vorzugsweise ist der Elektromotor in das betreffende Antriebsrad des Fahrzeugs integriert. Vorzugsweise sind die Lagerung des Rotors des Elektromotors und die Lagerung des betreffenden Antriebsrades des Fahrzeugs zusammengefaßt. Derartige Weiterbildungen führen zu kompakten Konstruktionen. Analog kann man die Lagerung des Rotors des Generators und die Lagerung einer Tretkurbel für das Antreiben des Generators zusammenfassen.

Zur Verkleinerung des Generators und/oder des Elektromotors kann man zwischen der Tretkurbel für das Antreiben des Generators und dem Generator ein Übersetzungsgetriebe in größere Drehzahl vorsehen und/oder zwischen dem Elektromotor und dem von diesem antreibbaren Fahrzeugrad ein Untersetzungsgetriebe in kleinere Drehzahl vorsehen. Für beide Fälle besonders geeignet sind einstufige oder auch mehrstufige Planetengetriebe, wobei diese vorzugsweise mindestens zum Teil im Inneren des Generators bzw. des Elektromotors untergebracht sind, besonders bevorzugt vollständig oder annähernd vollständig im Inneren des Generators bzw. des Elektromotors. Trotz der Variabilität der erfindungsgemäßen, elektrischen Leistungsübertragung ist es in bestimmten Fällen günstig, das genannte Getriebe bzw. die genannten Getriebe so auszuführen, daß sie zwischen mehreren Übersetzungs- bzw. Untersetzungsstufen schaltbar sind.

In den meisten Fällen ist es günstig, die Tretkurbel für das Antreiben des Generators und den Generator selbst räumlich in enger Nachbarschaft anzuordnen und von der Tretkurbel-Welle direkt auf den Rotor des Generators zu gehen. Alternativ ist es aber möglich und unter gewissen baulichen Gegebenheiten sogar günstig, die Tretkurbel für das Antreiben des Generators und den Generator selbst örtlich zu separieren und durch eine Antriebsverbindung zu verbinden. Die Antriebsverbindung kann ein Getriebe zur Drehzahländerung enthalten. Zuweilen ist es bevorzugt, den Generator und den Elektromotor zu einer Baueinheit zusammenzufassen, z.B. indem man ein gemeinsames Gehäuse mit erstem Statorbereich für den Generator und zweitem Statorbereich für den Elektromotor, aber separate Rotoren für den Generator und den Elektromotor vorsieht.

In Weiterbildung der Erfindung ist es bevorzugt, daß der Elektromotor zum Bremsen des Fahrzeugs auf Generatorbetrieb umschaltbar ist. Die beim Bremsen erzeugte elektrische Leistung kann insbesondere in einem oder mehreren Bremswiderständen in Wärme umgesetzt werden oder in einen Speicher für elektrische Energie eingespeist werden. Zum Auslösen der elektrischen Bremsung kann man insbesondere eine Handbedieneinrichtung oder eine Einrichtung, z.B. einen Schalter, vorsehen, die durch Rückwärtsdrehbewegung am Generator ähnlich wie eine Rücktrittbremse beim herkömmlichen Fahrrad betätigt wird.

Die Erfindung bietet auch die Möglichkeit, mit einer bevorzugten Weiterbildung die Maximalgeschwindigkeit des Fahrzeugs, insbesondere bei Bergabfahrt, auf elektrischem Wege zu steuern. Zu diesem Zweck kann man dem Elektromotor eine elektronische Steuerung zuordnen, die bei Überschreiten einer, vorzugsweise einstellbaren, Maximalgeschwindigkeit ein mechanisches und/oder elektrisches Bremsen auslöst. Die Funktion dieser elektronischen Steuerung kann mit der weiter vorn genannten elektronischen Steuerung zur Veränderung der ausgekoppelten elektrischen Leistung kombiniert sein. Darüberhinaus kann man vorsehen, daß vor Erreichen dieser Maximalgeschwindigkeit die Zufuhr elektrischer Leistung zu dem Elektromotor reduziert oder unterbrochen wird.

Nach einer besonders bevorzugten Weiterbildung der Erfindung ist zusätzlich zu dem Generator als Quelle elektrischer Leistung ein Speicher für elektrische Energie und/oder eine Verbrennungsmotor/Generator-Einheit und/oder eine Solarzelleneinrichtung vorgesehen. Eine derartige Quelle elektrischer Leistung hat insbesondere den Vorteil, daß der Fahrzeugbenutzer die Möglichkeit hat, in gewissen Phasen Zusatzleistung abzurufen, die zu dieser Zeit nicht von ihm selbst erzeugt wird. Als Beispiele derartiger Phasen seien Anfahren, Bergauffahrt, Einlegen einer Erholungsphase mit verringerter Tretleistung und gute Verfügbarkeit der Zusatzleistung, z.B. reichliche Sonneneinstrahlung ohne Wolkenabschattung bei der Solarzelleneinrichtung, genannt. Bei dem Speicher für elektrische Energie kann es sich um einen Primärspeicher oder um einen ladbaren Sekundärspeicher handeln. Das Einschalten der genannten Quelle elektrischer Leistung kann entweder durch Betätigung einer Bedieneinrichtung durch den Fahrzeugbenutzer erfolgen oder selbsttätig nach geeigneten Kriterien, wie Unterschreiten einer Schwelle der aus dem Generator kommenden elektrischen Leistung, Unterschreiten einer Drehzahlschwelle des Elektromotors, Überschreiten einer Ladungsschwelle des Speichers für elektrische Energie oder dergleichen. Es versteht sich, daß man das Einschalten der Quelle elektrischer Leistung in unterschiedlicher Intensität vorsehen kann, sei es stufenweise oder stufenlos. Ferner versteht sich, daß man das Einschalten der Quelle elektrischer Leistung vorsehen kann, auch wenn mittels des Generators zur Zeit keine elektrische Leistung erzeugt wird. Wenn ein ladbarer Speicher für elektrische Energie und eine Solarzelleneinrichtung vorgesehen sind, kann man diesen Speicher bei hinreichender Sonneneinstrahlung mittels der Solarzelleneinrichtung laden. Die Möglichkeit des Ladens des Speichers mit elektrischer Leistung, die durch Bremsen des Fahrzeugs erzeugt wird, ist weiter vorn bereits angesprochen worden.

Es seien aber noch weitere Möglichkeiten zum Laden des ladbaren Speichers für elektrische Energie erwähnt. Eine Möglichkeit ist das Laden aus dem Stromnetz während einer Phase des Nichtbetriebs des Fahrzeugs. Eine weitere Möglichkeit ist das Laden mit Hilfe eines Teils der im Generator erzeugten elektrischen Leistung, z.B. bei Bergabfahrt, wenn der Fahrzeugbenutzer problemlos über den Generator mehr elektrische Leistung erzeugen kann als für das Fahren benötigt wird, oder bei erzwungener Langsamfahrt.

In Weiterbildung der Erfindung kann an den Stromkreis, in dem Strom von dem Generator zu dem Elektromotor fließt, mindestens ein weiterer elektrischer Verbraucher angeschlossen sein, z.B. eine Fahrzeugbeleuchtung oder ein Audiogerät.

Der Generator und/oder der Elektromotor sind vorzugsweise mit dauermagnetischer Erregung und/oder nach dem Flußkonzentrationsprinzip aufgebaut, was zu besonders kompaktem und einfachem Aufbau und besonderer Robustheit führt. Unter Flußkonzentrationsprinzip wird verstanden, daß die Magnetflußdichte im Luftspalt zwischen dem Stator und dem Rotor größer ist als in den Erregermagneten. Ein bevorzugtes Beispiel für einen Aufbau nach dem Flußkonzentrationsprinzip findet sich in dem Dokument EP-A-0 331 180.

Vorzugsweise ist der Elektromotor so aufgebaut, daß er zur Lieferung hohen Drehmoments auf andere Wicklungsverschaltung umschaltbar ist, z.B. für steile Bergauffahrt eines überdurchschnittlich beladenen Fahrzeugs. Diese Umschaltbarkeit ist sinnvoller als eine betriebliche Auslegung des Elektromotors auf ein hohes Drehmomentspreizungsverhältnis (bezogen auf konstante Leistung), so daß auch solche relativ seltenen Extremanforderungen erfüllt werden können.

Man kann ferner vorsehen, daß an den Generator eine Leistungs-Zeit-Integrationseinheit angeschlossen ist, die also in einer bestimmten Zeitspanne die insgesamt erzeugte, elektrische Energie ermittelt. Diese gibt die Gesamtarbeit wieder, die der Fahrzeugbenutzer in dieser Zeitspanne geleistet hat, und ist deshalb für Fahrzeugbenutzer interessant, die den Trainingseffekt der Fahrzeugbenutzung quantitativ erfaßt haben möchten.

Die Erfindung ist nicht nur bei einem Fahrrad verwirklichbar, sondern auch bei anderen Fahrzeugen, wobei als ein Beispiel ein dreirädriges oder vierrädriges, leichtes Fahrzeug mit einer Wetterschutzkabine für den oder die Insassen genannt wird. Außerdem wird ausdrücklich darauf hingewiesen, daß mit Einsatz der Erfindung auch ein Trainingsgerät gebaut werden kann, bei dem ohne Fortbewegung elektrische Leistung erzeugt werden kann und anschließend entweder durch Umwandlung in Wärme vernichtet oder auch einer nutzvollen Verwendung zugeführt werden kann, z.B. Laden eines Speichers für elektrische Energie. Schließlich wird ausdrücklich darauf hingewiesen, daß die Erfindung nicht auf den Fall beschränkt ist, daß der Benutzer den Generator durch Beinbewegung antreibt. Ein Antreiben durch Armbewegung oder durch Rumpfbewegung oder durch Kombinationen von Bein-, Arm- und Rumpfbewegung ist möglich. Insofern kann der in einigen Ansprüchen und in der vorstehenden Beschreibung verwendete Begriff "Tretkurbel" durch "Einrichtung zum Antreiben des Generators durch Körperbewegungen" ersetzt werden.

Schließlich ist noch auf folgendes hinzuweisen: Bei konventionellen Fahrrädern muß für das Umschalten des mechanischen Übersetzungsverhältnisses die mechanische Leistungsübertragung kurzzeitig unterbrochen oder wesentlich reduziert werden. Dies ist bei dem erfindungsgemäßen Fahrzeug nicht der Fall. Die beschriebenen Änderungsvorgänge können ohne Leistungsunterbrechung oder Leistungsreduktion durchgeführt werden.

Die Erfindung und Weiterbildungen der Erfindung werden nachfolgend anhand eines zeichnerisch dargestellten Ausführungsbeispiels noch näher erläutert. Es zeigt:
- **Fig. 1**: ein Fahrrad in Seitenansicht;
- **Fig. 2**: ein Diagramm zur Veranschaulichung der elektrischen Verknüpfung wesentlicher Baueinheiten und der elektrischen Funktionen;
- **Fig. 3**: eine Tretkurbel / Generator-Baueinheit an der Tretlagerstelle des Fahrrads, im Achsenschnitt und im gegenüber Fig. 1 vergrößerten Maßstab;
- **Fig. 4**: eine Elektromotor/Getriebe-Baueinheit in der Hinterradnabe des Fahrrads, im Achsenschnitt und im gegenüber Fig. 1 vergrößerten Maßstab.

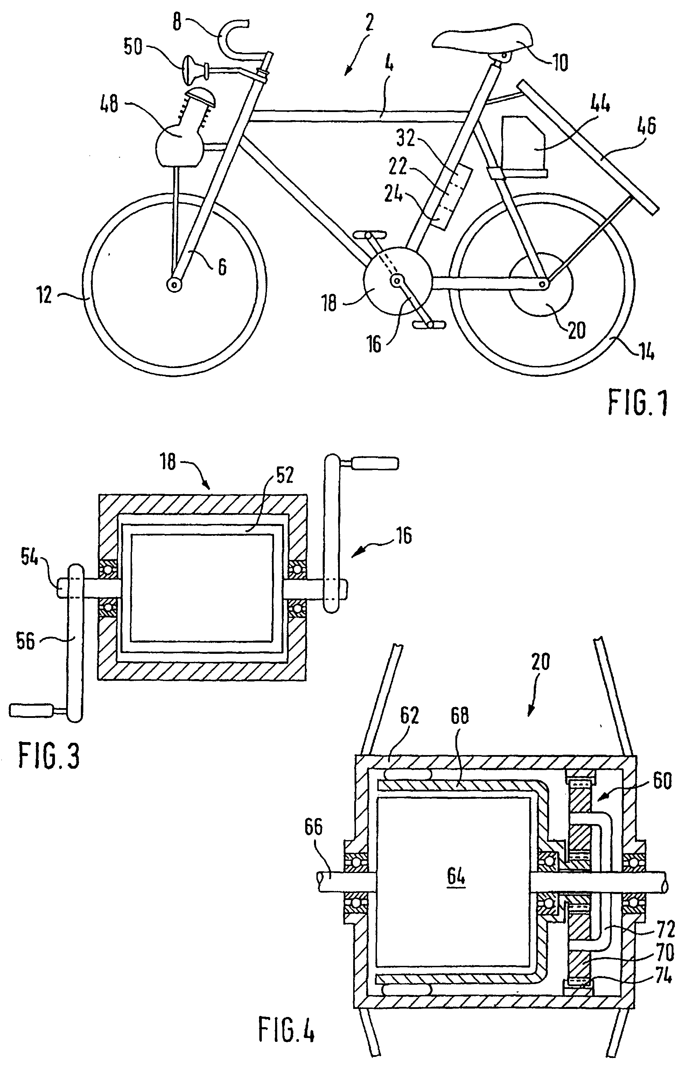

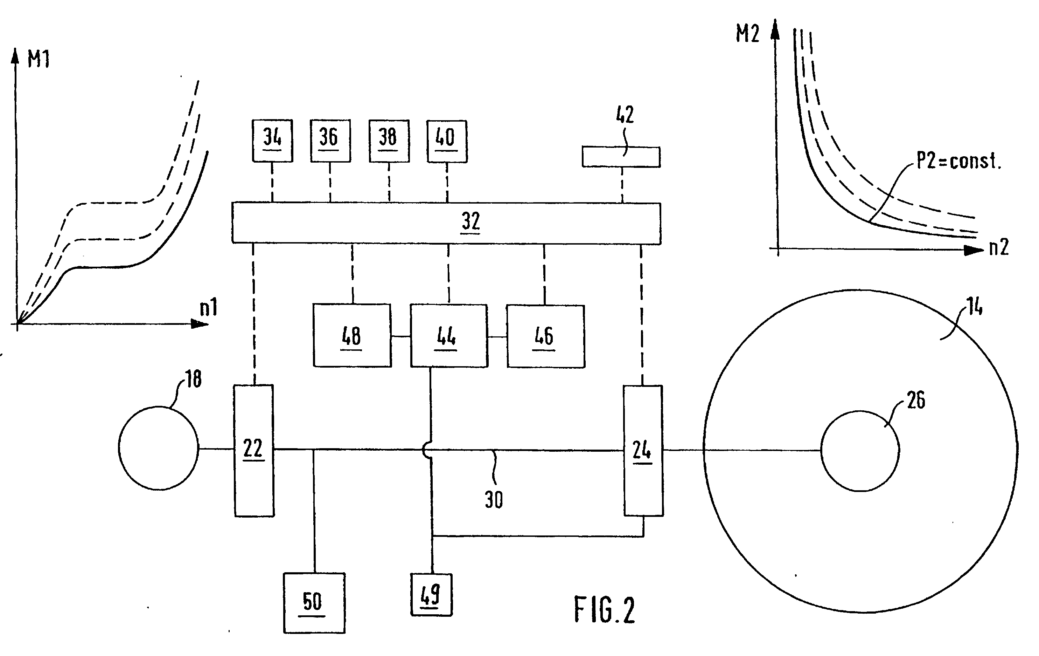

In Fig. 1 ist schematisiert ein Fahrrad 2 dargestellt. Abgesehen von den nachfolgend noch genauer zu beschreibenden Baueinheiten handelt es sich um ein konventionelles Fahrrad 2, welches im wesentlichen aus einem Rahmen 4, einer Vorderradgabel 6, einem Lenker 8, einem Sattel 10, einem Vorderrad 12 und einem Hinterrad 14 besteht. Auch eine Tretkurbel 16, im wesentlichen bestehend aus zwei diametralen Kurbelstangen und je einem Pedal am Ende, ist wie bei einem konventionellen Fahrrad vorgesehen. Allerdings gibt es kein Kettenrad an der Tretkurbel 16, kein Kettenrad an der Nabe des Hinterrads 14 und keine Kette zwischen diesen beiden Kettenrädern.

In demjenigen Bereich, wo bei konventionellen Fahrrädern das Tretlager der Tretkurbel 16 untergebracht ist, befindet sich bei dem gezeichneten Fahrrad 2 ein Generator 18 zur Erzeugung von elektrischer Leistung. Der Generator 18 hat einen größeren Durchmesser als das dort normalerweise befindliche Rohr zur Aufnahme des Tretlagers. Auf der Welle 54 der Tretkurbel 16 sitzt ein Rotor 52 des Generators 18, während am Innenumfang des im wesentlichen zylindrischen Generatorgehäuses ein nicht eingezeichneter Stator vorgesehen ist (siehe Fig. 3). Wenn die Tretkurbel 16 mit Muskelkraft in Rotation versetzt wird, wird in dem Generator 18 elektrische Leistung erzeugt.

In demjenigen Bereich, wo sich bei konventionellen Fahrrädern die Hinterradnabe befindet, ist bei dem dargestellten Fahrrad 2 die in Fig. 4 genauer dargestellte Elektromotor/Getriebe-Einheit 20 vorgesehen. Wenn dieser Einheit 20 elektrische Leistung zugeführt wird, erzeugt sie ein das Hinterrad 14 antreibendes Drehmoment.

In Fig. 2 erkennt man, daß dem Generator 18 eine elektronische Steuerung 22 und dem Elektromotor 26 der Elektromotor/Getriebe-Einheit 20 eine elektronische Steuerung 24 zugeordnet ist. Zwischen den Steuerungen 22 und 24 befindet sich ein Gleichspannungs-Zwischenkreis 30. Die beiden Steuerungen 22 und 24 können auch räumlich zusammengefaßt sein. Die elektronische Steuerung 22 des Generators 18 enthält einen aktiv gesteuerten Gleichrichter, welcher die Größe der von dem Generator 18 in den Zwischenkreis 30 ausgekoppelten, elektrischen Leistung bestimmt. Aktiv gesteuerte Gleichrichter sind bekannt, so daß sie hier nicht genauer beschrieben werden müssen. Die Zuordnung eines aktiv gesteuerten Gleichrichters zu dem Generator 18 bringt es mit sich, daß der Generator 18 dem die Tretkurbel 16 in Drehung versetzenden Benutzer des Fahrrads 2 einen höheren oder niedrigeren Rotationswiderstand entgegensetzt je nach Größe der ausgekoppelten elektrischen Leistung. Bei hohem Rotationswiderstand muß also der Benutzer mit seinen Beinmuskeln ein höheres Drehmoment aufbringen, um die Tretkurbel 16 ohne Nachlassen der Drehzahl zu drehen, und umgekehrt.

Die elektronische Steuerung 24 des Elektromotors 26 weist eine aktive Kommutierung des Elektromotors 26 der Elektromotor/Getriebe-Einheit 20 auf. Der Aufbau elektronischer Kommutierungen für Elektromotoren ist bekannt, so daß hierzu detaillierterte Ausführungen entbehrlich sind.

Eine Kontrollelektronik 32 ist an die elektronischen Steuerungen 22 und 24 angeschlossen, die jeweils als Leistungselektronik fungieren. An die Kontrollelektronik 32 sind mehrere Bedienelemente 34, 36, 38, 40 angeschlossen, die der Fahrzeugbenutzer von Hand bedienen kann. Mittels des ersten Bedienelements 34 kann der Fahrzeugbenutzer über die Kontrollelektronik 32 und die elektronische Steuerung 22 Einfluß nehmen auf die Größe der in den Zwischenkreis 30 eingespeisten elektrischen Leistung und auf die Art, wie der Benutzer diese elektrische Leistung erzeugt.

Sofern nicht die weiter unten zu beschreibenden Möglichkeiten der Energiespeicherung und/oder der Leistungseinspeisung aus anderer Quelle vorhanden sind, wird die aus dem Generator 18 ausgekoppelte und in den Zwischenkreis 30 eingespeiste, elektrische Leistung - abgesehen von geringen Leitungs- und Steuerungsverlusten - über die elektronische Steuerung 24 dem Elektromotor 26 zugeführt. Wenn man für möglichst einfaches Verständnis davon ausgeht, daß sich das Hinterrad 14 des Fahrrads 2 bereits mit der Drehzahl n2 dreht, kann (und muß) die Steuerung 24 so arbeiten, daß der Elektromotor 26 ein Drehmoment M2 = P2 / n2 erzeugt. Je nach den gerade herrschenden Fahrwiderständen führt dieses Drehmoment M2 zu einer Erhöhung oder einer Verringerung der Drehzahl n2 und somit der hiermit proportional zusammenhängenden Fahrgeschwindigkeit v des Fahrrads 2. Während dieses Übergangs zu einem neuen Gleichgewicht der Fahrgeschwindigkeit mit der zur Verfügung stehenden Leistung P2 ändert sich das Drehmoment M2, weil ja das Produkt M2 x n2 bei gleichbleibender Erzeugung elektrischer Leistung konstant bleiben muß.

Selbstverständlich kann der Benutzer durch schnelleres oder langsameres Treten die Drehzahl n1 des Generators 18 und damit die erzeugte elektrische Leistung P1 variieren. Dann geht der Elektromotor 26 mit seiner elektronischen Steuerung 24 auf eine "höhere" Kurve konstanter Leistung P2 (die unter Berücksichtigung der Verluste selbstverständlich gleich der Leistung P1 ist) über, wie sie in Fig. 2 oben rechts eingezeichnet ist. Ausgehend von der vorhandenen Drehzahl n2 erfolgt ein Übergang zu einem neuen Gleichgewichtszustand mit neuem M2 und neuem n2, wie zuvor beschrieben, aber mit höherer Leistung P2 = M2 x n2.

Alternativ kann man ein Fahrrad 2 ohne aktiv gesteuerten Gleichrichter bauen, anschaulich vorgestellt z.B. durch einen passiven, ungesteuerten Gleichrichter anstelle der elektronischen Steuerung 22. In diesem Fall läßt sich allerdings der Rotationswiderstand des Generators 18 nicht nach Wunsch des Fahrzeugbenutzers einstellen, sondern liegt entsprechend der Kennlinie des Generators in Relation zu dessen Drehzahl fest. Immerhin kann der Fahrzeugbenutzer durch langsameres oder schnelleres Treten, d.h. durch Variieren der Drehzahl n1 des Generators 18, die erzeugte elektrische Leistung P1 verändern. Für das Zuführen der elektrischen Leistung aus dem Zwischenkreis 30 zu dem Elektromotor 26 gilt das im vorstehenden Absatz Ausgeführte.

In Fig. 2 ist links oben eine Drehmoment-Drehzahl-Kennlinie des Generators 18 eingezeichent. Aus dieser Kennlinie kann man ersehen, welches Drehmoment M1 zum Drehen des Generators 18 (mit gleichbleibender Drehzahl) bei einer betrachteten Drehzahl n1 erforderlich ist. Es handelt sich nicht um eine "natürliche" Drehmoment-Drehzahl-Charakteristik, wie sie z.B. bei einem Generator 18 mit nachgeordnetem, passiven, ungesteuerten Gleichrichter vorhanden wäre. Vielmehr handelt es sich um eine z.B. mittels der Kontrollelektronik 32 und der elektronischen Steuerung 22 daraufhin modifizierte Kennlinie, so daß für einen bestimmten Drehzahlbereich ein zumindest im wesentlichen geradlinig-waagerechtes Drehmomentplateau vorhanden ist. Das Arbeiten mit einem Generator 18 mit einer derart modifizierten Kennlinie hat für den Benutzer den Vorteil, daß dann, wenn er sich mit dem Treten der Tretkurbel 16 im Drehzahlbereich das Plateaus aufhält, ein Verändern der Tretdrehzahl n1 praktisch ohne Änderung des Drehmoments M1, d.h. des Rotationswiderstands des Generators 18, möglich ist.

Es wird betont, daß es für die Verwirklichung der Erfindung keineswegs zwingend erforderlich ist, mit einer modifizierten Kennlinie des Generators 18 zu arbeiten. Auch mit einer unmodifizierten Kennlinie bleiben die am Anfang der Anmeldung geschilderten, durch die Erfindung erbrachten, fundamentalen Vorteile erhalten. Der Benutzer muß lediglich gewärtig sein, daß normalerweise der Rotationswiderstand des Generators 18 mit zunehmender Tretdrehzahl zunimmt.

Es versteht sich, daß beim Modifizieren der Kennlinie und beim Auslegen des Generators 18, gegebenenfalls mitsamt einem zugeordneten Getriebe, das Drehmomentplateau möglichst bei einem Drehzahlbereich vorhanden ist, der vom Benutzer am häufigsten benutzt wird.

In Fig. 2 rechts oben ist eine Drehmoment-Drehzahl-Kurve konstanter Leistung P2 des Elektromotors 26 eingezeichnet. Wenn die von dem Generator 18 stammende, erzeugte, elektrische Leistung P1 = P2 im Elektromotor verbraucht werden soll, kann dies im Prinzip mit beliebiger Kombination von Elektromotor-Drehmoment M2 und Elektromotor-Drehzahl n2 geschehen. Da jedoch normalerweise bereits eine Drehzahl n2 (die bei der Situation des Losfahrens naturgemäß Null ist) aufgrund der momentanen Fahrgeschwindigkeit des Fahrrads 2 vorgegeben ist, kann man aus der Drehmoment-Drehzahl-Kurve konstanter Leistung ablesen, welches Drehmoment M2 der Elektromotor 26 bei der zur Verfügung stehenden Leistung P2, abhängig von der gerade herrschenden Drehzahl n2, liefert. Je höher die Drehzahl n2 ist, desto niedriger ist naturgemäß M2.

Weiter vorn ist bereits angedeutet worden, daß der Benutzer mit dem ersten Bedienelement 34 auf die Kontrollelektronik 32 und über diese auf die elektronische Steuerung 22 des Generators 18 einwirken kann, um die Größe der von dem Generator 18 ausgekoppelten elektrischen Leistung zu verändern. Diese Veränderung geht einher mit Erhöhung oder Verringerung des Rotationswiderstands des Generators 18, wobei man sich dies zur Erleichterung des Verständnisses bei konstanter Drehzahl n1 vorstellen sollte. In Fig. 2 links oben sind in unterbrochenen Linien noch weitere, "höhere" Drehmoment-Drehzahl-Charakteristiken eingezeichnet. Das Erhöhen der ausgekoppelten elektrischen Leistung kann man sich vorstellen als Übergang von einer niedrigeren Charakteristik zu einer höheren Charakteristik (bei konstanter Drehzahl n1). Selbst wenn bei diesem Übergang die Drehzahl n1 (zunächst) konstant bleibt, erzeugt nun der Benutzer eine höhere elektrische Leistung. Auch während des Übergangs zu einer höheren Charakteristik geht im Gegensatz zum Hochschalten der Schaltung eines herkömmlichen Fahrrads die Leistungserzeugung unterbrechungsfrei weiter, und die Drehzahl n1 muß nicht notwendigerweise sprunghaft absinken, wie es bei mechanischen Schaltungen zwangsläufig der Fall ist. Jede dieser genannten Kurven beschreibt eine kontinuierliche stufenlose Kraftübertragung. Nach dem Übergang gilt die neue Kurve mit ihrer eventuell neuen Charakteristik.

Wenn man auf die beschriebene Weise zu einer höheren Charakteristik übergegangen ist (und nicht die Drehzahl n1 entsprechend abgesenkt hat), wird eine größere elektrische Leistung P1 erzeugt. Dementsprechend geht der Elektromotor 26 auf eine "höhere" Drehmoment-Drehzahl-Kurve konstanter Leistung P2, wie in unterbrochenen Linien eingezeichnet in Fig. 2 rechts oben, über, wie weiter vorn im Zusammenhang mit Bewegung entlang der Drehmoment-Drehzahl-Charakteristik des Generators 18 bereits geschildert.

Was als Übergang zu einer höheren Generatorcharakteristik und zu einer höheren Leistungskurve des Elektromotors 26 geschildert worden ist, spielt sich im umgekehrten Sinne ab, wenn der Benutzer auf eine niedrigere Generatorcharakteristik übergeht.

Bisher ist geschildert worden, daß der Benutzer mit dem ersten Bedienelement 34 nach Willen die bei gegebener Drehzahl n1 ausgekoppelte elektrische Leistung P1 verändern kann. Man kann stattdessen oder zusätzlich eine selbsttätige Veränderung der ausgekoppelten elektrischen Leistung vorsehen, vorzugsweise wenn die Drehzahl n1 nach unten oder nach oben aus einem für den Benutzer bequemen Drehzahlbereich herauskommt. Ferner ist es möglich, diesen vorbestimmten Bereich einstellbar zu machen, z.B. über das zweite Bedienelement 36.

Ferner kann man vorsehen, daß die Drehmoment-Drehzahl-Charakteristik des Generators 18 durch den Benutzer in gewissen Grenzen programmierbar ist. Hierfür ist beispielsweise eine Schnittstelle 42 der Kontrollelektronik 32 nach außen vorgesehen. Dort kann man einen äußeren Computer zur Programmierung der Charakteristik anschließen. Dies geschieht bevorzugt vor Fahrtantritt.

Das gezeichnete Fahrrad 2 weist außerdem einen Speicher 44 für elektrische Energie, eine Solarzelleneinrichtung 46 und eine Verbrennungsmotor/Generator-Einheit 48 auf. Es wird allerdings darauf hingewiesen, daß in der praktischen Verwirklichung der Erfindung häufig Fahrräder 2 ganz ohne derartige zusätzliche Quellen elektrischer Leistung, oder nur mit einer derartigen Quelle, oder nur mit zwei derartigen Quellen verkauft werden. Bei dem Speicher 44 handelt es sich um einen wiederaufladbaren Akkumulator mit möglichst günstigem Verhältnis von Speicherkapazität zu Gewicht; alternativ könnte ein nichtwiederaufladbarer Speicher elektrischer Energie vorgesehen sein. Bei der Verbrennungsmotor/Generator-Einheit 48 handelt es sich um einen möglichst kleinen, hochdrehenden Verbrennungsmotor mit direkt auf der Kurbelwelle sitzendem Generator. Jede der drei Quellen 44, 46, 48 ist ausgangsseitig mit dem Zwischenkreis 30 verbunden, außerdem für Steuerungszwecke mit der Kontrollelektronik 32. Sowohl die Solarzelleneinrichtung 46 als auch die Verbrennungsmotor/Generator-Einheit 48 ist elektrisch mit dem Speicher 44 verbunden (direkt oder über den Zwischenkreis 30).

Mittels des dritten Bedienelements 38 kann der Benutzer bestimmen, ob und in welchem Ausmaß und von welcher der Quellen 44, 46, 48 elektrische Leistung in den Zwischenkreis 30 eingespeist wird, und zwar entweder zusätzlich zu der aus dem Generator 18 kommenden elektrischen Energie oder statt dieser (zum Beispiel wenn der Benutzer gerade eine gewisse Tretpause einlegen will). Andererseits kann der Speicher 44 aus dem Zwischenkreis 30 und/oder von der Solarzelleneinrichtung 46 und/oder von der Verbrennungsmotor/Generator-Einheit 48 geladen werden. Auch hierfür kann der Benutzer die erforderlichen Befehle über das dritte Bedienelement 38 geben. Nutzung der Solarzelleneinrichtung 46 empfiehlt sich naturgemäß, sobald dort wegen vorhandener Sonneneinstrahlung elektrische Leistung erzeugt wird, wobei man diese elektrische Leistung zum Verbrauch im Elektromotor 26 beisteuern oder zum Laden des Speichers 44 nutzen oder auf beide Nutzungen aufteilen kann. Laden des Speichers 44 aus dem Zwischenkreis 30 empfiehlt sich, wenn man im Sinne einer "Vorratshaltung" den Energievorrat steigern will und dafür momentan langsameres Vorankommen mit dem Fahrrad 2 in Kauf nimmt. Eine Inbetriebnahme der Verbrennungsmotor/Generator-Einheit 48 empfiehlt sich insbesondere bei längerer Bergauffahrt oder Fahrt mit kräftigem Gegenwind oder zum nachhaltigen Laden des Speichers 44. Ein Einspeisen elektrischer Leistung aus dem Speicher 44 in den Zwischenkreis 30 empfiehlt sich ganz besonders als Anfahrhilfe oder als Hilfe bei Bergauffahrt. Die Solarzelleneinrichtung 46 kann z.B. von der Art sein, wie sie für Segelyachten bereits im Handel erhältlich ist.

Statt der Befehlsgabe mittels des dritten Bedienelements 38 oder zusätzlich hierzu kann ein selbsttätiges Zuschalten oder Abschalten der Quellen 44, 46, 48 oder Leiten der betreffenden elektrischen Leistung in den Zwischenkreis 30 oder den Speicher 44 nach geeigneten Kriterien vorgesehen sein. Als Beispiele seien genannt: Selbsttätiges Zuschalten des Speichers 44 beim Anfahren im Bereich n2 = 0 bis n2 = x, selbsttätige Inbetriebnahme der Verbrennungsmotor/Generator-Einheit 48 bei weit entladenem Speicher 44, selbsttätiges Zuschalten der Solarzelleneinrichtung 46 in den Zwischenkreis 30, sobald von der Sonneneinstrahlung her nennenswerte elektrische Leistung anfällt. Es ist allerdings günstig, derartige Automatikfunktionen durch das dritte Bedienelement 38 übersteuerbar auszubilden. Eine weitere Möglichkeit besteht darin, den Leistungsbeitrag der ausgewählten zusätzlichen Energiequelle in einem festen Verhältnis zur Generatorleistung festzulegen, so daß z.B. P2 (am Elektro-Antriebsmotor) = 2 x P1 (vom Generator) wird. Der Fahrzeugbenutzer steuert dabei die Leistung nach wie vor über die Pedale. Er spürt aber einen "elektrischen Rückenwind".

Mittels des vierten Bedienelements 40 läßt sich über die Kontrollelektronik 32 die elektronische Steuerung 24 des Elektromotors 26 so umsteuern, daß der Elektromotor 26 zum Bremsen des Fahrrads auf Generatorbetrieb umgeschaltet wird. Es kann vorgesehen sein, daß die jetzt von dem Elektromotor 26 erzeugte elektrische Leistung in einem Widerstand 49 in Wärme umgewandelt wird und/oder in den Speicher 44 gespeist wird. Im letztgenannten Fall kann man vorsehen, daß die Steuerung 24 dann als Gleichrichter arbeitet.

Schließlich ist in Fig. 2 ein weiterer Verbraucher 50 am Fahrrad 2 eingezeichnet. Hierbei kann es sich insbesondere um eine Fahrzeugbeleuchtung oder um ein Radio bzw. ein Tonbandabspielgerät bzw. ein Plattenabspielgerät für Musikkonserven handeln, so daß der Fahrer Musik hören kann, ohne Wegwerfbatterien zu benutzen.

Fig. 3 veranschaulicht an einem Ausführungsbeispiel die kompakte Unterbringung des Generators 18 in einem Bereich, wo sonst nur das Tretlager der Tretkurbel 16 sitzt. Der Tretlagerbereich ist in seinem Durchmesser vergrößert, und am Innenumfang des so entstandenen, zylindrischen Gehäuses sind Wicklungen und Polzähne des Generators 18 (nicht eingezeichnet) vorgesehen. Innerhalb befindet sich der mit Dauermagneten besetzte Rotor 52 des Generators 18. Auf der rechts und links nach außen geführten Rotorwelle 54 sind unmittelbar die Arme 56 der Tretkurbel 16 befestigt. Somit sind Lagerung der Tretkurbel 16 und Lagerung des Rotors 52 des Generators 18 miteinander vereinigt. Es wird darauf hingewiesen, daß man zwischen Tretkurbelwelle und Rotor des Generators 18 ein Übersetzungsgetriebe in größere Drehzahl vorsehen kann.

Fig. 4 veranschaulicht an einem Ausführungsbeispiel die kompakte Zusammenfassung des Elektromotors 26 mit einem axial danebenliegenden Planetengetriebe 60, beides im Inneren der Nabe 62 des Hinterrads 14. Infolge der erheblichen Drehzahluntersetzung, die das Planetengetriebe 60 leistet, kann ein sehr klein bauender Elektromotor 26 eingesetzt werden. Man erkennt, daß der Elektromotor 26 mit einem inneren, stationären Stator 64, der auf einer feststehenden Achse 66 sitzt, und einem topfförmigen Rotor 68 aufgebaut ist. Der Stator 64 besitzt an seinem Außenumfang Wicklungen und Polzähne, während der Rotor 68 an seinem Innenumfang mit Dauermagneten besetzt ist (beides nicht eingezeichnet). Der Rotor 68 ist in einem Endbereich mit einem Wälzlager in der Nabe 62 gelagert und in seinem anderen Endbereich mit einem Wälzlager auf der Achse 66. An seinem in Fig. 4 rechten Ende relativ kleinen Durchmesser ist der Rotor 68 mit einer Verzahnung versehen, die als Sonnenrad des Planetengetriebes 60 fungiert. Die Planetenräder 70 des Planetengetriebes 60 sitzen auf einem Planetenradträger 72, der stationär auf der Achse 66 befestigt ist. Die Planetenräder 70 kämmen außen mit einer Innenverzahnung 74 der Nabe 62. Es ist alternativ möglich, das Planetengetriebe 60 mindestens teilweise im Inneren des Stators 64 unterzubringen. Schließlich erkennt man Speichen 76, die von der Nabe 20 nach außen zu der Radfelge führen.

Ferner wird die Möglichkeit erwähnt, den Generator 18 mit dem Elektromotor 26 zu einer Baueinheit zusammenzufassen, z.B. örtlich dort, wo in Fig. 1 der Generator 18 eingezeichnet ist, oder örtlich dort, wo beim gezeichneten Fahrrad 2 der Elektromotor 26 sitzt. Dann benötigt man allerdings eine mechanische Drehmomentübertragung von dem mittig angeordneten Elektromotor nach hinten zu dem Hinterrad 14 bzw. von der Tretkurbelwelle nach hinten zu der kombinierten Generator/Elektromotor-Baueinheit.

## Patentansprüche

1. Mit Muskelkraft betreibbares Fahrzeug, insbesondere Fahrrad (2), aufweisend
(a) einen Generator (18), der zur Stromerzeugung durch einen Fahrzeugbenutzer antreibbar ist;
(b) und mindestens einen Elektromotor (26) zum Antreiben des Fahrzeugs, der mit dem Generator (18) zur Übertragung elektrischer Leistung verbunden ist,
**dadurch gekennzeichnet,**
**daß** der Generator (18) zur gesteuerten Auskopplung elektrischer Leistung mit elektronischer Kommutierung aufgebaut ist und dem Generator (18) eine elektronische Steuerung (22) zugeordnet ist, mit der die Größe der ausgekoppelten elektrischen Leistung stufenweise oder stufenlos veränderbar ist; und
**daß** der Elektromotor (26) mit elektronischer Kommutierung aufgebaut ist, wobei dem Generator (18) und dem Elektromotor (26) eine elektronische Steuerung (22; 24) zugeordnet ist, mit der das Verhältnis des am Generator (18) aufgebrachten Antriebsdrehmoments zu dem von dem Elektromotor (26) abgegebenen Drehmoment stufenweise oder stufenlos veränderbar ist.

2. Fahrzeug nach Anspruch 1,
**dadurch gekennzeichnet,**
**daß** die elektronische Steuerung (22; 24) selbsttätig die Größe der ausgekoppelten elektrischen Leistung oder das genannte Drehmomentverhältnis verändert, wenn das am Generator (18) aufgebrachte Drehmoment oder die Drehzahl des Generators (18) einen vorbestimmten Bereich verläßt.

3. Fahrzeug nach Anspruch 2,
**dadurch gekennzeichnet,**
**daß** der vorbestimmte Bereich veränderbär ist.

4. Fahrzeug nach einem der Ansprüchen 1 bis 3,
**dadurch gekennzeichnet,**
**daß** der Generator (18) eine Drehmoment-Drehzahl-Charakteristik mit einem Drehmomentplateau in einem häufig benutzten Drehzahlbereich besitzt, wobei vorzugsweise die Charakteristik einprogrammierbar ist.

5. Fahrzeug nach einem der Ansprüche 1 bis 4,
**dadurch gekennzeichnet,**
**daß** der Elektromotor (26) in ein Antriebsrad (14) des Fahrzeugs integriert ist.

6. Fahrzeug nach einem der Ansprüche 1 bis 5,
**dadurch gekennzeichnet,**
**daß** die Lagerung eines Rotors des Elektromotors und die Lagerung eines von dem Elektromotor antreibbaren Fahrzeugrades zusammengefaßt sind.

7. Fahrzeug nach einem der Ansprüche 1 bis 6,
**dadurch gekennzeichnet,**
**daß** die Lagerung eines Rotors (52) des Generators (18) und die Lagerung einer Tretkurbel (16) für das Antreiben des Generators (18) zusammengefaßt sind.

8. Fahrzeug nach einem der Ansprüche 1 bis 7,
**dadurch gekennzeichnet,**
**daß** zwischen dem Elektromotor (26) und einem von dem Elektromotor (26) antreibbaren Fahrzeugrad (14) ein Untersetzungsgetriebe (60) in kleinere Drehzahl vorgesehen ist.

9. Fahrzeug nach einem der Ansprüche 1 bis 8,
**dadurch gekennzeichnet,**
**daß** zwischen einer Tretkurbel (16) für das Antreiben des Generators (18) und dem Generator ein Übersetzungsgetriebe in größere Drehzahl vorgesehen ist.

10. Fahrzeug nach Anspruch 8 oder 9,
**dadurch gekennzeichnet,**
**daß** das Getriebe ein Planetengetriebe (60) ist, das vorzugsweise mindestens zum Teil im Inneren des Elektromotors (26) oder des Generators (18) untergebracht ist.

11. Fahrzeug nach einem der Ansprüche 8 bis 10,
**dadurch gekennzeichnet,**
**daß** das Getriebe (60) zwischen mehreren Untersetzungs- bzw. Übersetzungsstufen schaltbar ist.

12. Fahrzeug nach einem der Ansprüche 1 bis 11,
**dadurch gekennzeichnet,**
**daß** eine Tretkurbel (16) für das Antreiben des Generators (18) und der Generator (18) örtlich separiert und durch eine Antriebsverbindung verbunden sind.

13. Fahrzeug nach einem der Ansprüche 1 bis 12,
**dadurch gekennzeichnet,**
**daß** der Generator (18) und der Elektromotor (26) zu einer Baueinheit zusammengefaßt sind.

14. Fahrzeug nach einem der Ansprüche 1 bis 13,
**dadurch gekennzeichnet,**
**daß** der Elektromotor (26) zum Bremsen des Fahrzeugs auf Generatorbetrieb umschaltbar ist.

15. Fahrzeug nach Anspruch 14,
**dadurch gekennzeichnet,**
**daß** eine elektronische Steuerung (22; 24) vorgesehen ist, mit der die Einhaltung einer Maximalgeschwindigkeit des Fahrzeugs steuerbar ist.

16. Fahrzeug nach einem der Ansprüche 1 bis 15,
**dadurch gekennzeichet,**
daß zusätzlich zu dem Generator (18) als Quelle elektrischer Leistung ein Speicher (44) für elektrische Energie und/oder eine Verbrennungsmotor/Generator-Einheit (48) und/oder eine Solarzelleneinrichtung (46) vorgesehen ist.

17. Fahrzeug nach einem der Ansprüche 1 bis 16,
**dadurch gekennzeichnet,**
**daß** an den Stromkreis, in dem Strom von dem Generator (18) zu dem Elektromotor (26) fließt, mindestens ein weiterer elektrischer Verbraucher (50) angeschlossen ist, z.B. eine Fahrzeugbeleuchtung oder ein Audiogerät.

18. Fahrzeug nach einem der Ansprüche 1 bis 17,
**dadurch gekennzeichnet,**
**daß** der Generator (18) und/oder der Elektromotor (26) mit dauermagnetischer Erregung und/oder nach dem Flußkonzentrationsprinzip aufgebaut sind.

19. Fahrzeug nach einem der Ansprüche 1 bis 18,
**dadurch gekennzeichnet,**
**daß** der Elektromotor (26) zur Lieferung hohen Drehmoments auf andere Wicklungsverschaltung umschaltbar ist.

## Claims

1. A vehicle adapted to be propelled. by muscle power, in particular a bicycle (2), comprising
(a) a generator (18) adapted to be driven by a vehicle user in order to generate current;
(b) and at least one electric motor (26) for driving the vehicle, which is connected to said generator (18) for transmitting electric power,
**characterized in that** said generator (18) is composed with electronic commutation for controlled taking out of electric power, and said generator (18) has an electronic control (22) associated therewith by means of which the quantity of the electric power taken out is variable in steps or infinitely variable; and
**in that** said electric motor (26) is composed with electronic commutation, said generator (18) and said electric motor (26) having an electronic control (22; 24) associated therewith by means of which the ratio of the driving torque applied at the generator (18) to the torque output by the electric motor (26) is variable in steps or infinitely variable.

2. A vehicle according to claim 1,
**characterized in that** said electronic control (22; 24) automatically varies the quantity of the electric power taken out or said torque ratio when the torque applied at the generator or the speed of the generator (18) leaves a predetermined range.

3. A vehicle according to claim 2,
**characterized in that** said predetermined range is variable.

4. A vehicle according to any of claims 1 to 3,
**characterized in that** said generator (18) has a torque-speed characteristics with a torque plateau in a frequently used speed range, said characteristics being preferably programmable.

5. A vehicle according to any of claims 1 to 4,
**characterized in that** said electric motor (26) is integrated in a driving wheel (14) of the vehicle.

6. Avehicle according to any of claims 1 to 5,
**characterized in that** the support of a rotor of the electric motor and the support of a vehicle wheel adapted to be driven by the electric motor are combined.

7. A vehicle according to any of claims 1 to 6,
**characterized in that** the support of a rotor (52) of the generator (18) and the support of a pedal crank (16) for driving the generator (18) are combined.

8. A vehicle according to any of claims 1 to 7,
**characterized in that** a speed reducing gear system (60) to lower speed is provided between the electric motor (26) and a vehicle wheel (14) adapted to be driven by the electric motor (26).

9. A vehicle according to any of claims 1 to 8,
**characterized in that** a speed increasing gear system to higher speed is provided between a pedal crank (16) for driving the generator (18) and said generator.

10. A vehicle according to claims 8 or 9,
**characterized in that** said gear system is a planetary gear system (60) that is preferably accommodated at least in part inside of said electric motor (26) or said generator (18).

11. A vehicle according to any of claims 8 to 10,
**characterized in that** said gear system (60) is switchable between a plurality of speed reducing and speed increasing stages, respectively.

12. A vehicle according to any of claims 1 to 11,
**characterized in that** a pedal crank (16) for driving the generator (18) and said generator (18) are locally separated and connected by a driving connection.

13. A vehicle according to any of claims 1 to 12,
**characterized in that** said generator (18) and said electric motor (26) are combined to form a constructional unit.

14. A vehicle according to any of claims 1 to 13,
**characterized in that** said electric motor (26) is adapted to be switched to generator mode of operation for decelerating the vehicle.

15. A vehicle according to claim 14,
**characterized in that** an electronic control (22; 24) is provided adapted to control the speed of the vehicle so as to not exceed a maximum speed.

16. A vehicle according to any of claims 1 to 15,
**characterized in that** there is provided in addition to said generator (18), as source of electric power, an accumulator (44) for electric energy and/or a combustion engine/generator unit (48) and/or a solar cell means (46).

17. A vehicle according to any of claims 1 to 16,
**characterized in that** the circuit having current flowing therein from said generator (18) to said electric motor (26), has at least one additional electric consumer (50) connected thereto, e.g. a vehicle illumination means or an audio apparatus.

18. A vehicle according to any of claims 1 to 17,
**characterized in that** said generator (18) and/or said electric motor (26) are composed with permanent-magnet excitation and/or in accordance with the flow concentration principle.

19. A vehicle according to any of claims 1 to 18,
**characterized in that** said electric motor (18) is switchable to different winding connection for delivering high torque.

## Revendications

1. Véhicule pouvant fonctionner avec de la force musculaire, en particulier un vélo (2), présentant
(a) un générateur (18), qui peut être entraîné par un utilisateur de véhicule pour la production de courant,
(b) et au moins un moteur électrique (26) pour l'entraînement du véhicule, qui est relié au générateur (18) pour la transmission de puissance électrique,
**caractérisé**
**en ce que** le générateur (18) est conçu pour le découplage contrôlé de puissance électrique avec commutation électronique et au générateur (18) est attribuée une commande (22) électronique, avec laquelle la grandeur de la puissance électrique découplée peut être modifiée par paliers ou en continu ; et
**en ce que** le moteur électrique (26) est conçu avec une commutation électronique, une commande (22 ; 24) électronique étant attribuée au générateur (18) et au moteur électrique (26), commande avec laquelle on peut modifier par palier ou en continu le rapport entre le couple d'entraînement appliqué sur le générateur (18) et le couple émis par le moteur électrique (26).

2. Véhicule selon la revendication 1,
**caractérisé**
**en ce que** la commande électronique (22 ; 24) modifie automatiquement la grandeur de la puissance électrique découplée ou le rapport de couple cité, lorsque le couple appliqué sur le générateur (18) ou bien le régime du générateur (18) quitte une plage prédéfinie.

3. Véhicule selon la revendication 2,
**caractérisé**
**en ce que** la plage prédéfinie peut être modifiée.

4. Véhicule selon l'une quelconque des revendications 1 à 3,
**caractérisé**
**en ce que** le générateur (18) présente une caractéristique couple-régime avec un plateau de couple dans une plage de régimes souvent utilisée, la caractéristique pouvant de préférence être entrée par programmation.

5. Véhicule selon l'une quelconque des revendications 1 à 4,
**caractérisé**
**en ce que** le moteur électrique (26) est intégré dans une roue d'entraînement (14) du véhicule.

6. Véhicule selon l'une quelconque des revendications 1 à 5,
**caractérisé**
**en ce que** le montage sur palier d'un rotor du moteur électrique et le montage sur palier d'une roue de véhicule pouvant être entraînée par le moteur électrique sont regroupés.

7. Véhicule selon l'une quelconque des revendications 1 à 6,
**caractérisé**
**en ce que** le montage sur palier d'un rotor (52) du générateur (18) et le montage sur palier d'un pédalier (16) pour l'entraînement du générateur (18) sont regroupés.

8. Véhicule selon l'une quelconque des revendications 1 à 7,
**caractérisé**
**en ce qu'**il est prévu un démultiplicateur (60) dans un régime inférieur entre le moteur électrique (26) et une roue de véhicule (14) pouvant être entraînée par le moteur électrique (26).

9. Véhicule selon l'une quelconque des revendications 1 à 8,
**caractérisé**
**en ce qu'**il est prévu un multiplicateur dans un régime supérieur entre un pédalier (16) pour l'entraînement du générateur (18) et le générateur.

10. Véhicule selon la revendication 8 ou 9,
**caractérisé**
**en ce que** l'engrenage est un engrenage planétaire (60), qui est logé de préférence au moins en partie à l'intérieur du moteur électrique (26) ou du générateur (18).

11. Véhicule selon l'une quelconque des revendications 8 à 10,
**caractérisé**
**en ce que** l'engrenage (60) peut être commuté entre plusieurs niveaux de démultiplication ou de multiplication.

12. Véhicule selon l'une quelconque des revendications 1 à 11,
**caractérisé**
**en ce qu'**une manivelle (16) pour l'entraînement du générateur (18) et le générateur (18) sont séparés localement et sont reliés par une liaison d'entraînement.

13. Véhicule selon l'une quelconque des revendications 1 à 12,
**caractérisé**
**en ce que** le générateur (18) et le moteur électrique (26) sont regroupés en une unité modulaire.

14. Véhicule selon l'une quelconque des revendications 1 à 13,
**caractérisé**
**en ce que** le moteur électrique (26) est commutable sur le mode générateur pour le freinage du véhicule.

15. Véhicule selon la revendication 14,
**caractérisé**
**en ce qu'**il est prévu une commande (22 ; 24) électronique, qui permet de contrôler le respect d'une vitesse maximale du véhicule.

16. Véhicule selon l'une quelconque des revendications 1 à 15,
**caractérisé**
**en ce que**, en supplément du générateur (18), il est prévu comme source de puissance électrique un accumulateur (44) pour l'énergie électrique et/ou une unité moteur à combustion/générateur (48) et/ou un dispositif à cellules solaires (46).

17. Véhicule selon l'une quelconque des revendications 1 à 16,
**caractérisé**
**en ce qu'**au circuit, dans lequel du courant circule du générateur (18) au moteur électrique (26), est raccordé au moins un autre consommateur électrique (50), par exemple un éclairage de véhicule ou un appareil audio.

18. Véhicule selon l'une quelconque des revendications 1 à 17,
**caractérisé**
**en ce que** le générateur (18) et/ou le moteur électrique (26) sont conçus avec une excitation à aimantation permanente et/ou selon le principe de concentration de flux.

19. Véhicule selon l'une quelconque des revendications 1 à 18,
**caractérisé**
**en ce que** le moteur électrique (26) est commutable pour fournir un couple élevé à l'autre circuit d'enroulement.
